# EUROPEAN PATENT SPECIFICATION

(11) **EP 1 152 273 B1**
(45) Date of publication and mention of the grant of the patent: **17.08.2005**
(21) Application number: 01830292.7
(22) Date of filing: 04.05.2001
(51) Int. Cl.: G02B 13/14

(54) **Objective for infrared vision systems**
Objektiv für Infrarot Sichtsystem
Objectif pour système de vision infra-rouge

(30) Priority: 04.05.2000 IT TO000419
(43) Date of publication of application: 07.11.2001
(73) Proprietor: C.R.F. Società Consortile per Azioni, 10043 Orbassano (Torino) (IT)
(72) Inventor: Repetto, Piermario, 10145 Torino (IT); Perlo, Piero, 12048 Sommariva Bosco (Cuneo) (IT); Bigliati, Claudia, 13039 Trino (Vercelli) (IT)
(74) Representative: Marchitelli, Mauro

(56) References cited:
- WO-A-98/19196
- GB-A- 2 065 916
- GB-A- 2 181 567
- US-A- 5 196 957
- US-A- 5 886 821

## Description

This invention relates to a lens system for thermal infrared vision systems. In particular, this invention relates to a lens system destined to be used in an infrared thermal camera to focus the infrared image output by the scene (bands: MWIR 3-5 µm, LWIR 8-14 µm) on a matrix of sensors of the "Focal Plane Array" (FPA) type. The lens system according to this invention was developed particularly for use with uncooled sensors (UFPA), for example resistive, ferroelectric, thermoelectric bolometers, etc. The lens according to this invention can also be used with cooled sensors (photoconductive or photovoltaic sensors, etc.).

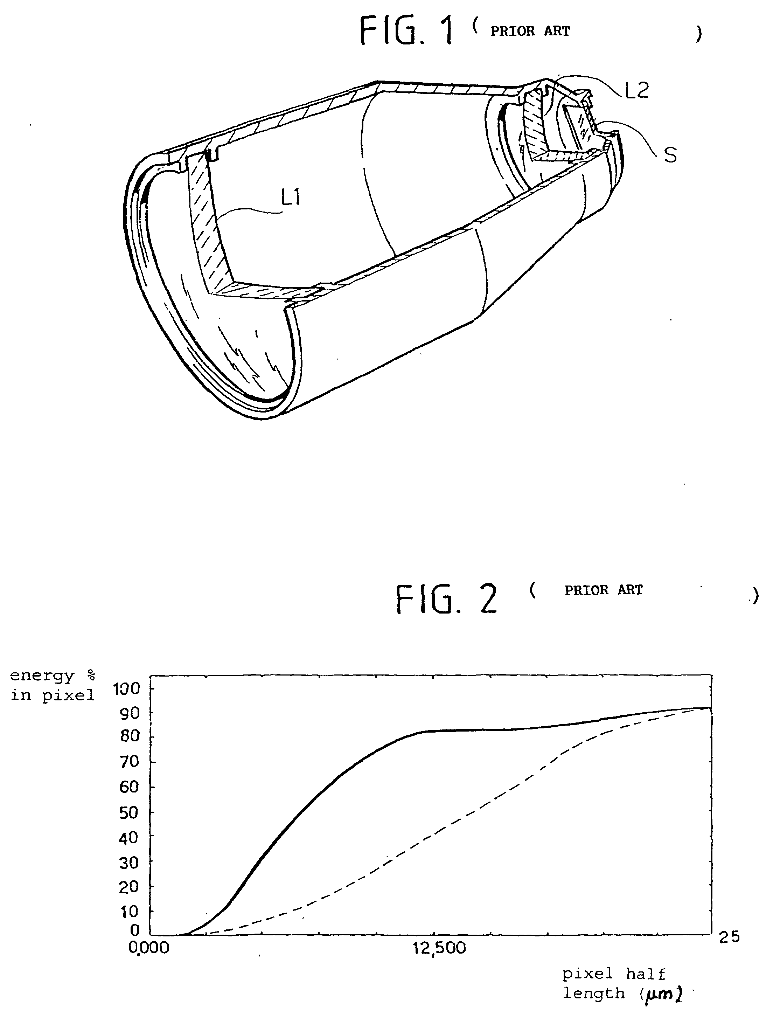

With an FPA 320x240 pixel sensor, whose active area dimensions are equal to 16x12 mm and pixel dimensions are 50x50 µm, the dimensions of the image point generated by the lens must be smaller than 50 µm. Normally, thermal infrared radiation lenses comprise a pair of lens made of semiconductor material, such as, for example, germanium, silicon, zinc arsenide, etc. These materials are extremely costly and require high precision machining. Three lens are normally required to obtain the necessary resolution with a germanium lens. Alternatively, at least one surface of a lens is aspheric, which implies increased manufacturing costs. Figure 1 in the accompanying drawings illustrates a thermal infrared lens system according to the known technique, which employs a first aspheric germanium lens L1, with a diameter of 65 mm, and a second spheric germanium lens L2, with a diameter of 32 mm. These lenses focus the thermal radiation on a UFPA type sensor S. Figure 2 illustrates the percentage of energy in a pixel of the sensor S according to the half length of the pixel. The curve drawn with a solid line refers to a central pixel of the sensor S while the curve drawn with a dotted line refers to a pixel arranged on one extremity of the sensor. The curves related to the pixels located in intermediate positions, between the central area and the extremity areas, are comprised between the two extreme curves illustrated in the graph in figure 2. Figure 2 shows that, considering one pixel, which dimensions are 50x50 µm (half length of the pixel is 25 µm), the percentage of energy in each pixel of the sensor S is higher than 90%. The graph in figure 2 was obtained with a number F (ratio between the effective focal length and the diameter of the input pupil) equal to 1.2, with a field of view (FOV) of 12x9° and a total lens length of 106 mm. The problem of this known solution is represented by its very high cost. Similar performance and costs are obtained with two lenses made of other semiconductor material, for example ZnSe, or calcogenide (AMTIR1, AMTIR3, etc.).

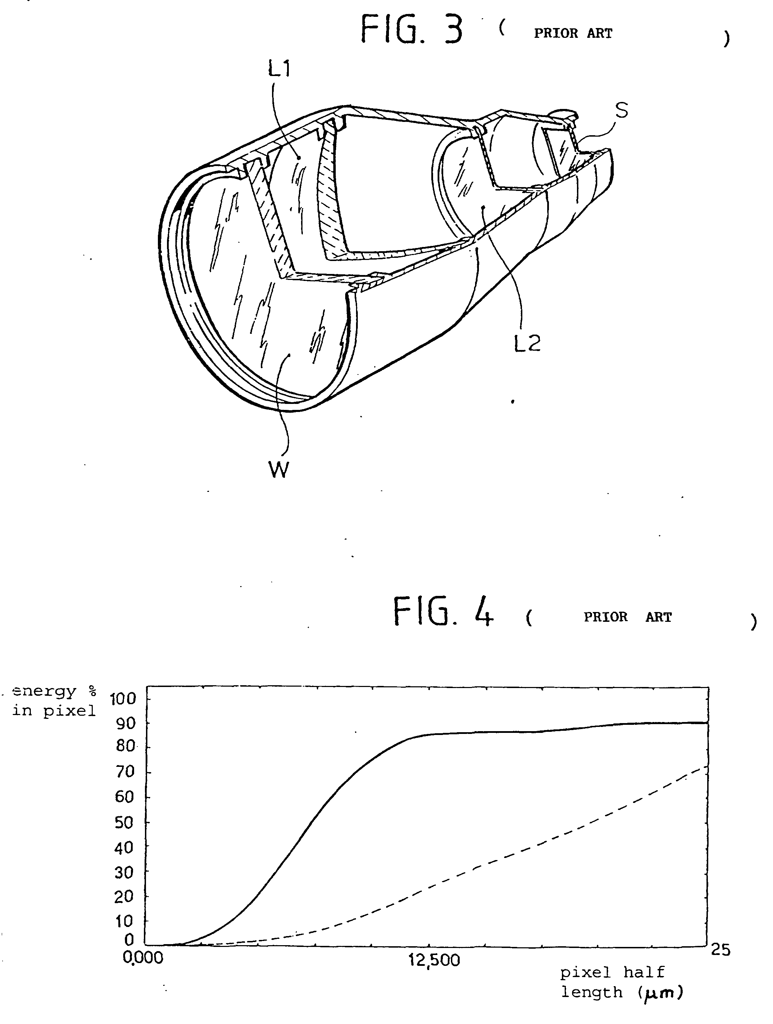

A known solution permitting a considerable cost reduction is illustrated in figure 3 and made by Raytheon TI. This solution employs a protective silicon window W, with a diameter of 65 mm, a printed calcogenide glass lens L1, with a diameter of 70 mm, and a flat, injection moulded, high density polyethylene Fresnel lens, with a diameter of 36.5 mm. The lens focuses the picture on a sensor S. Given an F number of 1.2, a field of view of 12x9° and a total length of 98.4 mm, this known lens provides a graph such as that illustrated in figure 4 for the percentage of energy in the pixel according to the half length of the pixel. In figure 4, as described above, the dotted line shows the curve related to one extremity pixel and the solid line shows the curve related to a central pixel and the curves related to the intermediate pixels are comprised between the two extreme curves illustrated in figure 4. This solution permits enclosed energy of 90° in most of the field of view. The percentage of energy in a pixel drops to values of 70% in extremity pixels.

Despite this solution being considerably more cost-effective with respect to that employing two germanium lenses, the cost of the lens is still excessively high for many types of applications.

WO-A-9819196 discloses an infrared lens system comprising a lens set including one or more refractive lenses. The refractive lens may be positioned along an optic axis to receive infrared radiation. The lens set may be designed to focus infrared radiation of a scene at an image plane. An athermalization element may be positioned along the optic axis in optical communication with the lens set. The athermalization element may include an infrared transmitting member supporting a diffractive pattern. The infrared transmitting member may comprise an infrared transmitting polymer. The diffractive pattern may compensate for temperature induced changes in a focal length of the lens set to maintain infrared radiation of the scene in focus at the image plane.

The purpose of this invention is to provide a lens for thermal infrared vision systems, with high resolution and a cost which is considerably lower with respect to the known solutions described above. An additional purpose of this invention is to provide a lens for infrared applications, which weight is considerably lower than the known solutions.

According to this invention, this purpose is reached by a lens which characteristics are described in the main claim.

This invention will be better explained by the following detailed descriptions with reference to the accompanying figure as non-limiting example, whereas:
- figure 1, 2 and 3, 4, described above, illustrate two lens systems according to the known technique and the respective resolution graphs,
- figure 5 is a perspective schematic view illustrating a first form of embodiment of the lens system according to this invention,
- figure 6 is a lateral schematic view of the lens system shown in figure 5,
- figure 7 is a lateral schematic view, similar to figure 6, illustrating a second form of embodiment of a lens system according to this invention and
- figure 8 is a graph illustrating the resolution of a lens system according to this invention.

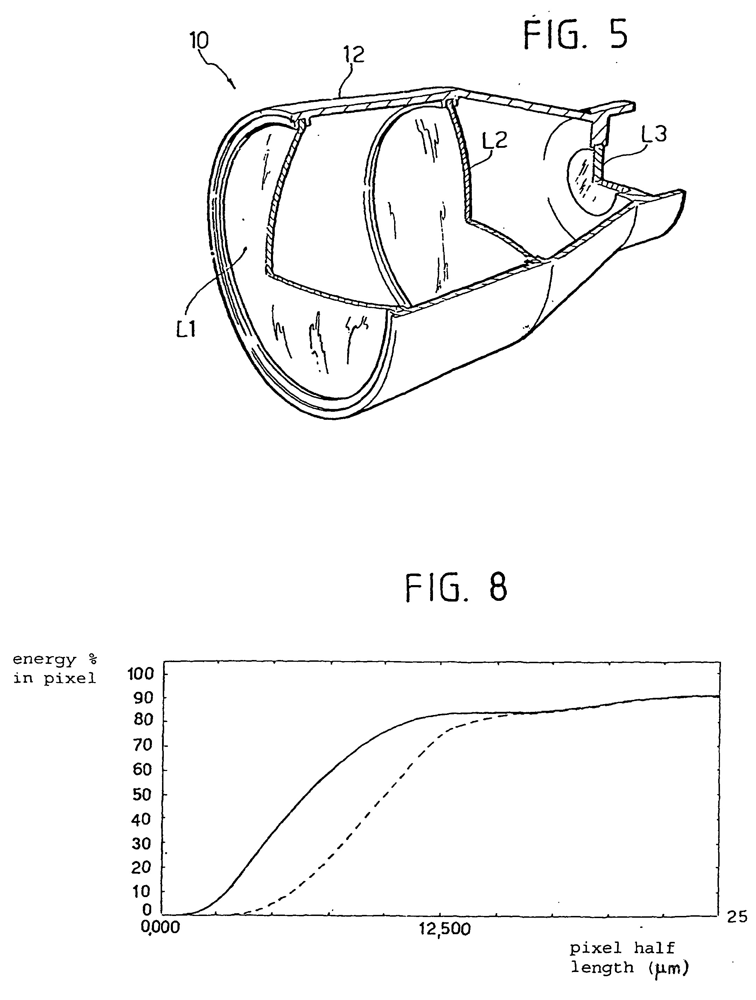

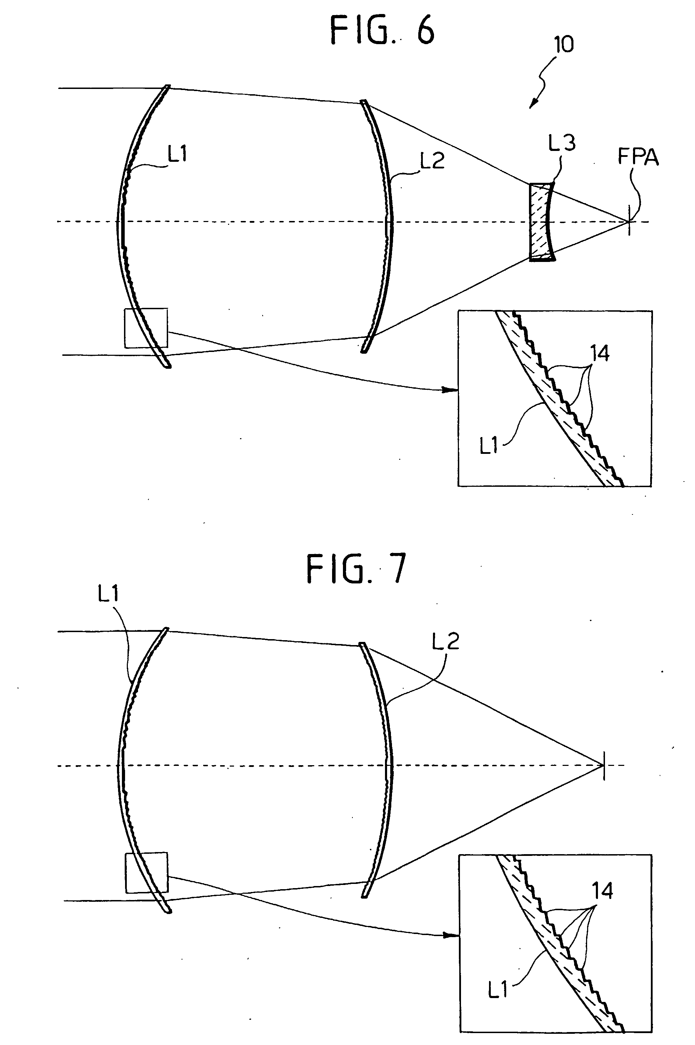

With reference to figures 5 and 6, a lens according to a first form of embodiment of this invention is indicated by numeral 10. The lens 10 comprises an external enclosure 12 with two Fresnel lenses L1 and L2, each of which is made of moulded plastic material, preferably high density polyethylene (HDPE). The lenses L1 and L2 both have a positive focus and a reduced thickness, preferably in the range of 0.5 to 1 mm. Each lens L1, L2 consists of two curved surfaces separated by a reduced thickness so to form a half-shell. The reduced thickness ensures high infrared radiation transmittance (60% for LWIR across a thickness of 0.5 mm). The inner surface of the half-shell, namely the surface which is closer to the centres of curvature of said two curved surfaces, presents a set of micro-relieves 14 (figure 6), presenting a rotational symmetry with respect to the axis of the lens. The shape of the curved surfaces, the distribution of micro-relieves and the distance between the two Fresnel lens L1 and L2 are optimised so to minimise aberration on the image plane containing the FPA type sensor. The shape of the curved surfaces is generally aspheric, but this does not cause increased production costs because the lenses are obtained by injection moulding.

Figure 7 illustrates a lens system in which the two lenses L1 and L2 focus the image directly on the FPA sensor. Figures 5 and 6 illustrates a form of embodiment in which the lens system is also equipped with an additional lens L3, made either of semiconductor material (Ge, Si, ZnSe, ZnS, etc.) or glass (e.g. calcogenide, AMTIR-1, AMTIR-3, etc.), arranged near the image plane. The proximity of the image plane minimises the dimensions of the lens L3 (25 mm in the example shown), consequently providing advantages in terms of cost with respect to the solution employing two germanium lenses with a relatively large diameter. In a preferred form of embodiment, the lens L3 is a concave-flat ZnSe, ZnS or AMTIR lens, with spheric curvature on the first or second surface.

In a variant not illustrated herein, the lens L3 can be a Fresnel lens, for example flat, made of moulded plastic material. In an additional variant not illustrated herein, the lens L3 can be replaced by a reflecting optical element, preferably made of moulded plastic material and equipped with a reflecting coating, for example aluminium, with a focus power suitable for correctly residual aberration of the system.

In a preferred form of embodiment, the F number is equal to 1.2, the input pupil diameter is equal to 60-100 mm, the Fresnel lenses L1 and L2 are at a distance of 50-70 mm, the lens L3 is at a distance of 40-50 mm from the lens L2 and the image plane is at 2-10 mm from the lens L3.

The lens system according to this invention offers superior performance with respect to the germanium spheric lenses, with a greater reduction of cost in the other of several units. For example, for an F number equal to 1.2, an input pupil diameter equal to 70 mm and a focus of 84 mm, the lens implementing polyethylene Fresnel lenses according to this invention offers an image point smaller than 150 µm in a field of view of 12x9°, while the germanium lens allows a maximum image point of 1400 µm. The lens system according to this invention presents a more limited transmittance, lower than 40% for HDPE lenses compared with 90% of a germanium lens. This limits the sensitivity of the thermal camera, but does not affect resolution.

By optimising the system parameters, image point dimensions smaller than 50 µm can be obtained in a field of view of 12x9°(see figure 8).

The material of the Fresnel lenses L1 and L2 can be changed with the addition of dopants, oxides or semiconductor powders (e.g. Si, ZnSe, ZnS, calcogenide, halogenide salts, such as NaCl, KCl, KBr, etc.) with the effect of filtering undesired regions of the spectrum and/or increasing HDPE transmittance. The dimension of the powders must be such to produce minimum scattering in the LWIR band (e.g. average particle diameter of 100nm).

The lens system according to this invention can be provided with scratch-proof coating on the external surface of the lens L1. An additional coating can be provided on the other optical surfaces. Typically, the lens L3, having a high refraction index (2.2-4) requires an anti-reflection treatment to maximise reflectance.

The casing 12 holding the lenses L1 and L2 can be equipped with an iris for modifying the F number of the lens. It can also include a mechanical device for adjusting the distance between the lenses L1 and L2 or between the lenses L2 and L3, so to allow accurate image focusing. The internal surface of the casing 12 can be equipped with baffles for minimising reflection of radiation from angle external to the field of view.

A fundamental advantage of the lens according to this invention is related to its weight, which is extremely reduced with respect to the known solutions. This characteristic, along with its extremely low cost, permits the extraordinary extension of the range of application of infrared vision systems.

Naturally, numerous changes can be implemented to the construction and forms of embodiment of the invention herein envisaged, all comprised within the context of the concept characterising this invention, as defined by the following claims.

## Claims

1. Imaging Lens system for thermal infrared vision systems, comprising a first and a second shell-shaped Fresnel lens (L1, L2) made of moulded plastic material and distanced from each other in a direction perpendicular to a focal plane array (FPA), wherein each lens (L₁, L₂) consits of two curved surfaces separated by a reduced thickness so to form a half-shell and wherein both said lenses (L₁, L₂) have micro-relieves (14) on their inner surface, namely the surface which is closer to the centers of curvature of said two curved surfaces.

2. Imaging lens system according to claim 1, **characterised in that** said set of micro-relieves (14) provide both said lenses (L1, L2) with a positive focal power.

3. Imaging lens system according to claim 1, **characterised in that** said two curved surfaces of said lenses (L1, L2) are aspheric.

4. Imaging lens system according to claim 1, **characterised in that** said lenses (L1, L2) are made of high density polyethylene.

5. Imaging lens system according to claim 4, **characterised in that** the material of the lenses (L1, L2) contains dopants, oxides or semiconductor powder and/or halogenide salts for filtering the undesired regions of the spectrum and/or increasing the transmittance of the plastic material of the lens.

6. Imaging lens system according to claim 5, **characterised in that** said powders have an average particle dimension which is smaller than 100 nm.

7. Imaging lens system according to claim 1, **characterised in that** it comprises a third optical element (L3) arranged near the image plane.

8. Imaging lens system according to claim 7, **characterised in that** the third optical element is a lens (L3) made of semiconductor material or glass.

9. Imaging lens system according to claim 7, **characterised in that** the third optical element is a Fresnel lens made of moulded plastic material.

10. Imaging lens system according to claim 7, **characterised in that** the third optical element is a reflecting element.

11. Imaging lens system according to claim 10, **characterised in that** said reflecting optical element is made of plastic material with a reflecting coating.

12. Imaging lens system according to claim 7, **characterised in that** the third optical element is a flat-concave lens (L3) with a spheric curvature on the first or second surface.

13. Imaging lens system according to claim 7, **characterised in that** the third optical element is a ZnSe, ZnS or AMTIR lens.

14. Imaging lens system according to claim 1, **characterised in that** it comprises a scratch-proof coating on at least one of said lenses (L1).

15. Imaging lens system according to claim 7, **characterised in that** the third optical element has an anti-reflection coating for infrared radiation.

16. Imaging lens according to claim 1, **characterised in that** it comprises an iris for modifying the F number of the lens.

17. Imaging lens system according to claim 1, **characterised in that** said lenses (L1, L2) are connected to a stiff casing (12) with baffles on the internal surface for minimising the reflection of radiation from angles external to the field of view.

## Patentansprüche

1. Bildobjektivsystem für thermische Infrarot-Sichtsysteme, aufweisend eine erste und eine zweite schalenförmige Fresnel-Linse (L1, L2), hergestellt aus gegossenem Kunststoffmaterial und voneinander beabstandet in einer Richtung senkrecht zur Brennebenenanordnung (FPA), wobei jede Linse (L1, L2) aus zwei gekrümmten Oberflächen besteht, getrennt durch eine verringerte Dicke, um so eine Halbschale auszubilden, und wobei beide Linsen (L1, L2) Mikroreliefs (14) an ihrer inneren Oberfläche aufweisen, nämlich der Oberfläche, welche näher am Mittelpunkt der Krümmung der zwei gekrümmten Oberflächen ist.

2. Bildobjektivsystem gemäß Anspruch 1, **dadurch gekennzeichnet, dass** der Satz von Mikroreliefs (14) zwei Linsen (L1, L2) mit positiver Brennleistung versieht.

3. Bildobjektivsystem gemäß Anspruch 1, **dadurch gekennzeichnet, dass** die zwei gekrümmten Oberflächen der Linsen (L1, L2) asphärisch sind.

4. Bildobjektivsystem gemäß Anspruch 1, **dadurch gekennzeichnet, dass** die Linsen (L1, L2) aus hochdichtem Polylethylen hergestellt sind.

5. Bildobjektivsystem gemäß Anspruch 4, **dadurch gekennzeichnet, dass** das Material der Linsen (L1, L2) Beimengungen, Oxide oder Halbleiterpulver und/oder Halogenitsalze enthält zum Filtern der unerwünschten Bereiche des Spektrums und/oder zum Erhöhen der Transmittanz des Kunststoffmaterials der Linse.

6. Bildobjektivsystem gemäß Anspruch 5, **dadurch gekennzeichnet, dass** die Pulver eine durchschnittliche Partikelabmessung aufweisen, welche kleiner als 100 nm ist.

7. Bildobjektivsystem gemäß Anspruch 1, **dadurch gekennzeichnet, dass** es ein drittes optisches Element (L3) aufweist, angeordnet nahe der Bildebene.

8. Bildobjektivsystem gemäß Anspruch 7, **dadurch gekennzeichnet, dass** das dritte optische Element eine Linse (L3) ist, hergestellt aus Halbleitermaterial oder Glas.

9. Bildobjektivsystem gemäß Anspruch 7, **dadurch gekennzeichnet, dass** das dritte optische Element eine Fresnel-Linse ist, hergestellt aus gegossenem Kunststoffmaterial.

10. Bildobjektivsystem gemäß Anspruch 7, **dadurch gekennzeichnet, dass** das dritte optische Element ein reflektierendes Element ist.

11. Bildobjektivsystem gemäß Anspruch 10, **dadurch gekennzeichnet, dass** das reflektierende optische Element aus Kunststoffmaterial mit einer reflektierenden Beschichtung hergestellt ist.

12. Bildobjektivsystem gemäß Anspruch 7, **dadurch gekennzeichnet, dass** das dritte optische Element eine flach-konkave Linse (L3) mit einer sphärischen Krümmung an der ersten oder zweiten Oberfläche ist.

13. Bildobjektivsystem gemäß Anspruch 7, **dadurch gekennzeichnet, dass** das dritte optische Element eine ZnSe-, ZnS- oder AMTIR-Linse ist.

14. Bildobjektivsystem gemäß Anspruch 1, **dadurch gekennzeichnet, dass** es eine kratzfeste Beschichtung auf zumindest einer der Linsen (L1) aufweist.

15. Bildobjektivsystem gemäß Anspruch 7, **dadurch gekennzeichnet, dass** das dritte optische Element eine Antireflexionsbeschichtung für Infrarotstrahlung aufweist.

16. Bildobjektivsystem gemäß Anspruch 1, **dadurch gekennzeichnet, dass** es eine Irisblende zur Modifikation der Blendenzahl des Objektivs aufweist.

17. Bildobjektivsystem gemäß Anspruch 1, **dadurch gekennzeichnet, dass** die Linsen (L1, L2) an einer steifen Hülle (12) verbunden sind, mit Blenden an der inneren Oberfläche zur Verringerung der Reflexion von Strahlung aus Winkeln, die außerhalb des Blickfelds sind.

## Revendications

1. Système de lentilles d'imagerie pour systèmes de vision infrarouge thermiques, comprenant une première et une seconde lentille Fresnel en forme de ménisque (L1, L2) constituées d'un matériau plastique moulé et séparées les unes des autres dans une direction perpendiculaire à un plan image (FPA), dans lequel chaque lentille (L1, L2) consiste en deux surfaces incurvées séparées par une épaisseur réduite afin de former une demi-coque et ces deux lentilles (L1, L2) présentent des micro-reliefs (14) sur leur surface intérieure, à savoir la surface qui est la plus proche des centres de courbure des deux surfaces incurvées.

2. Système de lentilles d'imagerie selon la revendication 1, **caractérisé en ce que** l'ensemble de micro-reliefs (14) confère un pouvoir convergent positif aux deux lentilles (L1, L2).

3. Système de lentilles d'imagerie selon la revendication 1, **caractérisé en ce que** les deux surfaces incurvées des lentilles (L1, L2) sont asphériques.

4. Système de lentilles d'imagerie selon la revendication 1, **caractérisé en ce que** les lentilles (L1, L2) sont constituées en polyéthylène haute densité.

5. Système de lentilles d'imagerie selon la revendication 4, **caractérisé en ce que** le matériau des lentilles (L1, L2) contient des dopants, des oxydes ou une poudre semi-conductrice et/ou des sels d'halogénures destinés à filtrer les régions non désirées du spectre et/ou augmenter le facteur de transmission du matériau plastique de la lentille.

6. Système de lentilles d'imagerie selon la revendication 5, **caractérisé en ce que** lesdites poudres possèdent un diamètre de particule moyen inférieur à 100 nm.

7. Système de lentilles d'imagerie selon la revendication 1, **caractérisé en ce qu'**il comprend un troisième élément optique (L3) disposé près du plan image.

8. Système de lentilles d'imagerie selon la revendication 7, **caractérisé en ce que** le troisième élément optique est une lentille (L3) composée d'un matériau semi-conducteur ou de verre.

9. Système de lentilles d'imagerie selon la revendication 7, **caractérisé en ce que** le troisième élément optique est une lentille de Fresnel composée d'un matériau plastique moulé.

10. Système de lentilles d'imagerie selon la revendication 7, **caractérisé en ce que** le troisième élément optique est un élément réfléchissant.

11. Système de lentilles d'imagerie selon la revendication 10, **caractérisé en ce que** ledit élément optique réfléchissant est composé d'un matériau plastique qui possède un revêtement réfléchissant.

12. Système de lentilles d'imagerie selon la revendication 7, **caractérisé en ce que** que le troisième élément optique est une lentille concave-plate (L3) avec une courbure sphérique sur la première ou la seconde surface.

13. Système de lentilles d'imagerie selon la revendication 7 **caractérisé en ce que** le troisième élément optique est une lentille en ZnSe, ZnS ou AMTIR.

14. Système de lentilles d'imagerie selon la revendication 1, **caractérisé en ce qu'**il comprend un revêtement inrayable sur au moins une des dites lentilles (L1).

15. Système de lentilles d'imagerie selon la revendication 7, **caractérisé en ce que** le troisième élément optique possède un revêtement antireflet pour radiation infrarouge.

16. Système de lentilles d'imagerie selon la revendication 1, **caractérisé en ce qu'**il comprend un iris destiné à modifier le nombre F d'ouverture de la lentille.

17. Système de lentilles d'imagerie selon la revendication 1, **caractérisé en ce que** lesdites lentilles (L1, L2) sont raccordées à une enceinte rigide (12) avec des chicanes sur la surface interne destinées à minimiser la réflexion de la radiation depuis des angles externes au champ de vision.
